# EUROPÄISCHE PATENTANMELDUNG

(11) **EP 4 560 882 A1**
(43) Veröffentlichungstag der Anmeldung: **28.05.2025**
(21) Anmeldenummer: 23211085.8
(22) Anmeldetag: 21.11.2023
(51) Int. Cl.: H02K 1/14, H02K 15/02

(54) **STATORSEGMENTE MIT EINFÜHRBAREM AUSGLEICHELEMENT**

(71) Anmelder: Hilti Aktiengesellschaft, 9494 Schaan (LI)
(72) Erfinder: Dotz, Boris, 86937 Scheuring (DE); Ludwig, Wolfgang, 86874 Zaisertshofen (DE); Schaefer, Thomas, 86836 Obermeitingen (DE); Asmus, Torsten, 87600 Kaufbeuren (DE); Gerold, Johannes, 82418 Murnau (DE)
(74) Vertreter: Hilti Aktiengesellschaft Corporate Intellectual Property

(57) **Zusammenfassung**

Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Jede Zahneinrichtung enthält einen bogenförmigen Ringabschnitt und eine Verbindungsvorrichtung mit einem ersten und zweiten Verbindungselement, wobei das erste und zweite Verbindungselement so formschlüssig miteinander verbindbar sind, dass in einem verbundenen Zustand wenigstens eine Aussparung zwischen dem ersten und zweiten Verbindungselement zum Aufnehmen eines Ausgleichelements vorgesehen ist, wobei das Ausgleichelement zur Erhöhung der Passung zwischen dem ersten und zweiten Verbindungselement ausgestaltet ist und die Aussparung wenigstens eine in radialer Richtung zugängliche Öffnung zum Einführen des Ausgleichelements enthält.

## Beschreibung

Die vorliegende Erfindung betrifft einen Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Statoren als ein Bestandteil für Elektromotoren gemäß dem Stand der Technik weisen im Wesentlichen ein Ringelement sowie ein Anzahl an Zahnelementen auf. Die Zahnelemente erstrecken sich dabei von einer inneren Mantelfläche des Ringelements zu einem Mittelpunkt des Ringelements. An den freien Ende der Zahnelemente verbleibt ein kreisförmiger Freiraum für einen Rotor. Jedes Zahnelement dient zum Aufnehmen und Halten einer Wickelspule auf leitfähigem Spulendraht zum entsprechenden Erzeugen eines Magnetfeldes.

Insbesondere bei kleinen Statoren ist die Umwicklung der einzelnen Zahnelemente mit einem Spulendraht für gewöhnlich mit einem hohen technischen Aufwand verbunden. Der zur Verfügung stehende Raum zwischen benachbarten Zahnelementen ist häufig eng bemessen, sodass eine schnelles und vor allem ordentliches Wickeln einer Spule um ein Zahnelement viel Zeit, eine aufwendige Wickelvorrichtung sowie hohe Kosten erzeugt.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Vorteilhafte Ausführungsformen des erfindungsgemäßen Gegenstands sind in den abhängigen Patentansprüchen enthalten.

Die Aufgabe wird insbesondere gelöst durch einen Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Erfindungsgemäß ist vorgesehen, dass jede Zahneinrichtung einen bogenförmigen Ringabschnitt und eine Verbindungsvorrichtung mit einem ersten und zweiten Verbindungselement enthält, wobei das erste und zweite Verbindungselement so formschlüssig miteinander verbindbar sind, dass in einem verbundenen Zustand wenigstens eine Aussparung zwischen dem ersten und zweiten Verbindungselement zum Aufnehmen eines Ausgleichelements vorgesehen ist, wobei das Ausgleichelement zur Erhöhung der Passung zwischen dem ersten und zweiten Verbindungselement ausgestaltet ist und die Aussparung wenigstens eine in radialer Richtung zugängliche Öffnung zum Einführen des Ausgleichelements enthält.

Die Passung kann auch als Pass- oder Passungsgenauigkeit verstanden werden.

Gemäß einer weiteren vorteilhaften Ausführungsform kann es möglich sein, dass die Verbindungsvorrichtung wenigstens einen ersten und zweiten Hinterschnitt enthält.

Entsprechend einer weiteren vorteilhaften Ausführungsform kann es möglich sein, dass das Ausgleichelement wenigstens teilweise einen aushärtbaren Werkstoff enthält. Bei dem aushärtbaren Werkstoff kann es sich beispielsweise um ein Polymer, Kunstharz oder dergleichen handeln.

Gemäß einer weiteren vorteilhaften Ausführungsform kann es möglich sein, dass das erste Verbindungselement an einem freien Ende des bogenförmigen Ringabschnitts und das zweite Verbindungselement im Wesentlichen an einem ersten Ende des Stegelements positioniert ist.

Die zur Unterteilung der Zahnelemente erforderlichen Trennlinien der Verbindungsstellen beeinträchtigen den magnetischen Kreis sowie den strukturellen Zusammenhalt des Stators insgesamt. Dies kann sich nachteilig auf die Leistungsdichte, Stabilität und/oder das Geräuschverhalten des gesamten Elektromotors auswirken. Insbesondere bei als Stanzkanten ausgeprägten Trennlinien ist deren negativer Einfluss auf die elektromagnetischen Eigenschaften eines Statorbleches zu berücksichtigen.

Zur Minimierung dieser Nachteile hat es sich als vorteilhaft bewiesen, dass entsprechend einer weiteren alternativen Ausführungsform wenigstens eine erste Verbindungsstelle des ersten und zweiten Verbindungselements im Wesentlichen in einer Ebene durch eine Zahneinrichtung liegt. Hierdurch kann ein Bereich des magnetischen Kreises durch den Stator mit einer hohen magnetischen Flussdichte in radialer Erstreckung eines Zahnelements liegen, wodurch der magnetische Fluss optimiert wird.

Gemäß einer weiteren vorteilhaften Ausführungsform kann es möglich sein, dass das erste und zweite Verbindungselement in einem geschlossenen Zustand wenigstens eine formschlüssige, kraftschlüssige und/oder stoffschlüssige Verbindung zueinander erzeugen. Hierdurch kann auf einfache Art und Weise eine Verbindung der Verbindungselemente erreicht werden. Es ist dabei möglich, dass neben einer mechanischen Verbindung, d.h. formschlüssige oder kraftschlüssige Verbindung, auch eine stoffschlüssige Verbindung in Form eines Klebstoffes zwischen den angrenzenden Ringabschnitten vorgesehen ist.

Entsprechend einer weiteren vorteilhaften Ausführungsform kann es möglich sein, dass die Verbindungsvorrichtung als Schnappverbindung ausgestaltet ist. Hierdurch kann auf einfache Art und Weise eine verlässliche und wiederlösbare Verbindung der Verbindungselemente erreicht werden.

Gemäß einer weiteren vorteilhaften Ausführungsform kann es möglich sein, dass die Verbindungsvorrichtung als Fügeverbindung ausgestaltet ist. Hierdurch kann auf einfache Art und Weise eine wiederlösbare Verbindung der Verbindungselemente erreicht werden, welche keine elastische Verformbarkeit der Verbindungselemente oder Teile der Verbindungselemente erfordert. Zu wiederlösbaren Verbinden oder Trennen können die Verbindungselemente einfach in einer Statorachse gegeneinander bzw. relativ zueinander verschoben werden.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine mit einem Antrieb gemäß einer bespielhaften Ausführungsform;
- Figur 2: eine perspektivische Seitenansicht auf einen Stator und Rotor als Bestandteil des Antriebs;
- Figur 3: eine perspektivische Seitenansicht auf den Stator mit einer Anzahl an Zahneinrichtungen; und
- Figur 4: eine Vorderansicht auf zwei benachbarte Zahneinrichtungen mit einer Verbindungsvorrichtung enthaltend ein erstes und zweites Verbindungselement gemäß einer beispielhaften Ausführungsform.

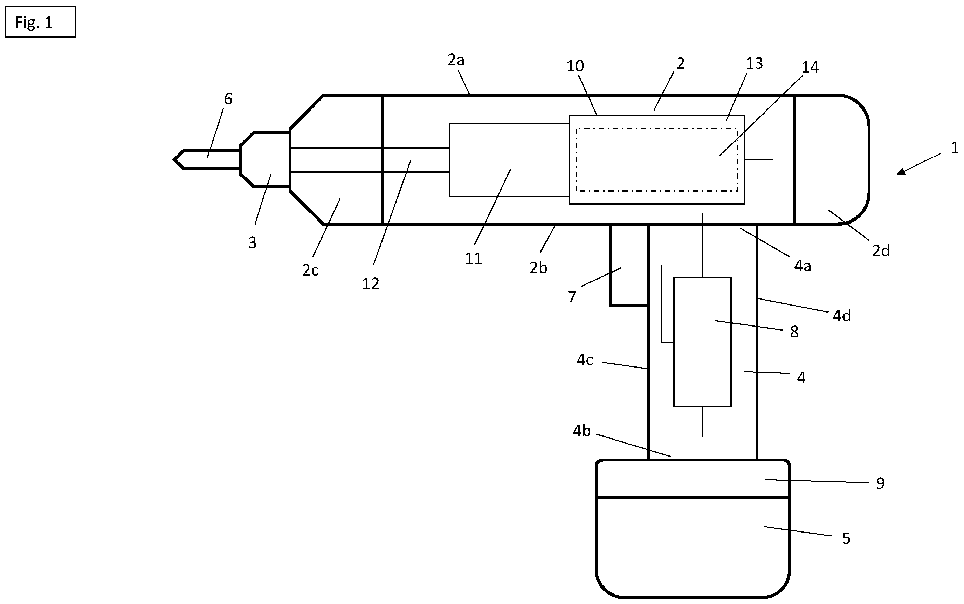

Figur 1 zeigt eine Werkzeugmaschine 1 in Form eines Akku-Schraubers gemäß einer bespielhaften Ausführungsform.

Alternativ kann die Werkzeugmaschine 1 auch in Form eines Bohrhammer, Kombihammer, Bohrmaschine, Säge, Schleifgeräts oder dergleichen ausgestaltet sein.

Wie in Figur 1 gezeigt, enthält die Werkzeugmaschine 1 gemäß der bespielhaften Ausführungsform im Wesentlichen ein Gehäuse 2, eine Werkzeugaufnahme 3, einen Handgriff 4 und eine Energieversorgung 5.

Das Gehäuse 2 weist eine Oberseite 2a, eine Unterseite 2b, ein vorderes Ende 2c und ein hinteres Ende 2d auf.

An dem vorderen Ende 2c des Gehäuses 2 ist die Werkzeugaufnahme 3 positioniert, die zum Aufnehmen und Halten eines Werkzeuges 6 dient. In dem vorliegenden Fall ist das Werkzeug 6 als Schrauber-Bit (oder nur Bit genannt) ausgestaltet.

Der Handgriff 4 dient zum Halten und Führen der Werkzeugmaschine 1 durch einen (in den Figuren nicht gezeigten) Anwender. Der Handgriff 4 weist ein oberes Ende 4a, ein unteres Ende 4b, eine Vorderseite 4c und eine Rückseite 4d auf. Das obere Ende 4a des Handgriffs 4 ist mit der Unterseite 2b des Gehäuses 2 der Werkzeugmaschine 1 verbunden.

Wie Figur 1 erkennbar, ist an der Vorderseite 4c des Handgriffs 4 ein Betätigungsschalter 7 positioniert. Der Betätigungsschalter 7 dient zum Aktivieren der Werkzeugmaschine 1. Im Inneren des Handgriffs 4 ist eine Steuerungseinrichtung 8 der Werkzeugmaschine 1 positioniert und dient zum Steuern sowie Regeln der Funktionen der Werkzeugmaschine 1.

An der Unterseite 2b des Gehäuses 2 der Werkzeugmaschine 1 ist eine Fussvorrichtung 8 mit einer Werkzeugmaschinenschnittstelle 9 vorgesehen. Die Werkzeugmaschinenschnittstelle 9 dient zum wiederlösbaren Verbinden der Werkzeugmaschine 1 mit der Energieversorgung 5.

Die Energieversorgung 5 ist in der vorliegenden Ausführungsform als Akkumulator ausgestaltet. Gemäß einer alternativen und in den Figuren nicht gezeigten Ausführungsform kann die Energieversorgung 5 auch als Stromkabel zum wiederlösbaren Verbinden der Werkzeugmaschine 1 mit einer Netzstromquelle (auch Steckdose genannt) ausgestaltet sein.

Im Inneren des Gehäuses 2 der Werkzeugmaschine 1 ist des Weiteren ein Antrieb 10, eine Getriebevorrichtung 11 sowie eine Antriebswelle 12 vorgesehen. Der Antrieb 10 ist in dem vorliegenden Ausführungsbeispiel als Elektromotor ausgestaltet und dient zum Erzeugen eines Drehmoments. Der als Elektromotor ausgestaltete Antrieb 10, die Getriebevorrichtung 11 und die Antriebswelle 12 sind dabei so zueinander in dem Gehäuse 2 angeordnet bzw. positioniert, dass ein von dem Antrieb 10 erzeugtes Drehmoment über die Getriebevorrichtung 11, die Antriebswelle 12 und schließlich auf die Werkzeugaufnahme 3 übertragen werden kann.

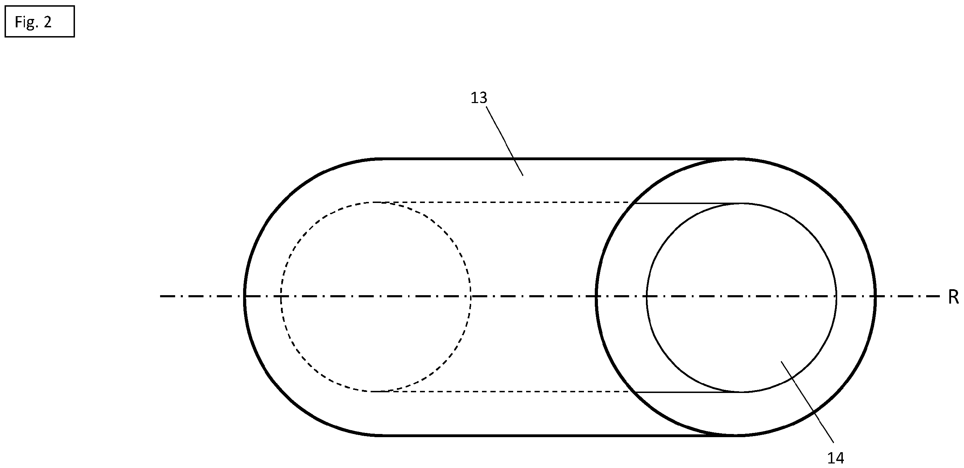

Der Antrieb 10 enthält wiederum im Wesentlichen einen Stator 13 und einen in dem Stator 13 positionierten und relativ zu dem Stator 13 drehbaren Rotor 14, vgl. Figur 2. Der Rotor 14 dreht sich dabei um eine Mittelachse MA des Stators 13.

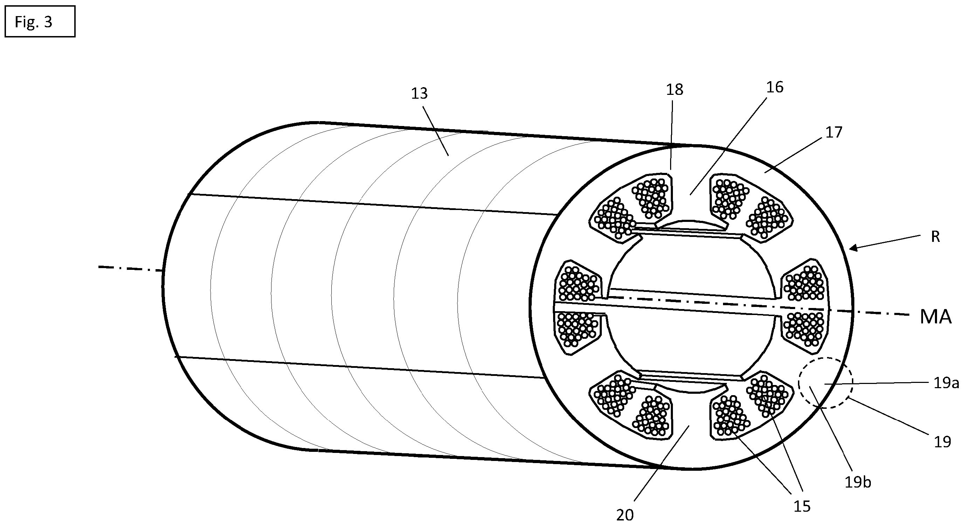

Wie in Figur 3 bis 5 ersichtlich, enthält der Stator 13 gemäß der beispielhaften Ausführungsform sechs Zahneinrichtung 20. Gemäß alternativer Ausführungen kann der Stator 13 auch mehr oder weniger als sechs Zahneinrichtungen 20 enthalten.

Jede einzelne Zahneinrichtung 20 dient zum Aufnahme einer Spulenwicklung 15 aus einem leitfähigen Draht. Bei dem Werkstoff des leitfähigen Drahts kann es sich um beispielsweise um Kupfer oder eine Kupferlegierung handeln.

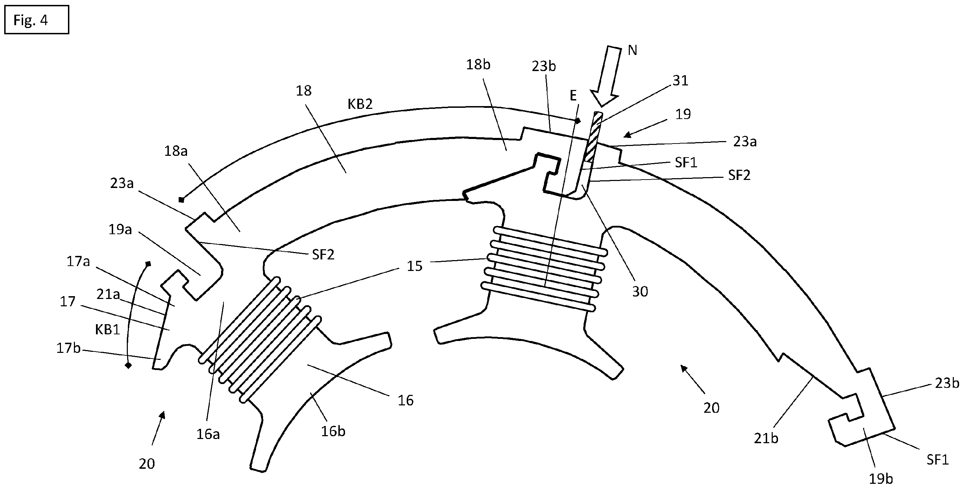

Jede Zahneinrichtung 20 enthält ein Stegelement 16 sowie einen bogenförmigen ersten Ringabschnitt 17 und zweiten Ringabschnitt 18. Wie in den Figuren 3 und 4 zu erkennen ist, formen die einzelnen Ringabschnitte 17, 18 in einem Zusammenschluss einen geschlossenen, kreisförmigen Ring R.

Das Stegelement 16 weist ein erstes Ende 16a und zweites Ende 16b auf, wobei zwischen dem ersten und zweiten Ende 16a, 16b die Spulenwicklung 15 angebracht wird. Das jeweilige erste Ende 16a des Stegelements 16 ist dabei an einer Mantelinnenfläche des von den einzelnen Ringabschnitten 17, 18 entstandenen Rings R positioniert. Das zweite Ende 16b des Stegelements 16 ragt zu einem Mittelpunkt M des Rings R. Die Länge der Stegelemente 16 sind so gewählt, dass eine kreisförmige Aussparung im Innen des Stators 13 verbleibt. In diese Aussparung kann der Rotor 14 platziert werden.

Wie in den Figuren ersichtlich, weist sowohl der erste und zweite Ringabschnitt 17, 18 jeweils ein erstes und zweites Ende 17a, 17b, 18a, 18b auf. Das erste Ende 17a des ersten Ringabschnitts 17 ist dabei an dem ersten Ende 16a des Stegelements 16 positioniert. Das erste Ende 18a des zweiten Ringabschnitts 18 ist ebenfalls an dem ersten Ende 16a des Stegelements 16 positioniert. Die beiden Ringabschnitt 17, 18 erstrecken sich in entgegengesetzte Richtungen um den Ring R.

In Figur 4 ist eine Zahneinrichtung 20 gemäß einer ersten Ausführungsform dargestellt, wobei der erste Ringabschnitt 17 einen längeren ersten Kreisbogen KB1 aufweist als der zweite Kreisbogen KB2 des zweiten Ringabschnitts 18. Mit anderen Worten: der erste Ringabschnitt 17 weist ein größeres Volumen auf als der zweite Ringabschnitt 18. In dem dargestellten Ausführungsbeispiel entspricht das Volumen des zweiten Ringabschnitts 18 im Wesentlichen 1/4 oder 25% des Volumens des ersten Ringabschnitts 17.

Darüber hinaus enthält jede Zahneinrichtung eine Verbindungsvorrichtung 19 mit einem ersten und zweiten Verbindungselement 19a, 19b. Das erste Verbindungselement 19a ist dabei an dem ersten Ringabschnitt 17 und das zweite Verbindungselement 19b ist an dem zweiten Ringabschnitt 18 positioniert.

In dem vorliegenden Ausführungsbeispiel ist die Verbindungsvorrichtung 19 als Fügeverbindung ausgestaltet. Die als Fügeverbindung ausgestaltete Verbindungsvorrichtung 19 dient dabei zum wiederlösbaren Verbinden der einzelnen Ringabschnitte 17, 18 und damit der einzelnen Zahneinrichtung 20 zu einem durchgehenden ringförmigen Stator 13.

Das erste Verbindungselement 19a an dem ersten Ringabschnitt 17 ist im Wesentlichen in Form eines Hakens ausgestaltet. Das zweite Verbindungselement 19b an dem zweiten Ringabschnitt 18 ist wiederum als ein zu dem Haken korrespondierenden Erhebung ausgestaltet, sodass das erste Verbindungselement 19a mit dem zweiten Verbindungselement 19b in Eingriff gebracht werden kann. Wie in Figur 4 ersichtlich, umschließt das als Haken ausgestaltete erste Verbindungselement das als korrespondierende Erhebung ausgestaltete zweite Verbindungselement 19b, sodass eine formschlüssige Verbindung zwischen dem ersten und zweiten Verbindungselement 19a, 19b entsteht. Durch den Eingriff des ersten Verbindungselements 19a in das zweite Verbindungselement 19b werden der erste und zweite Ringabschnitt 17, 18 miteinander verbunden.

Wie in Figur 4 dargestellt, ist das erste und zweite Verbindungselement 19a, 19b dabei jeweils so ausgestaltet, dass in einem verbundenen Zustand eine Aussparung 30 zwischen dem ersten und zweiten Verbindungselement 19a, 19b verbleibt. Die Aussparung 30 dient zum Aufnehmen und Halten eines Ausgleichelements 31. Die Aussparung 30 ist dabei im Wesentlichen in Form eines länglichen Spalts zwischen einer ersten Stirnfläche SF1 des ersten Verbindungselements 19a und einer zweiten Stirnfläche SF2 des zweiten Ringabschnitts 18 ausgestaltet. Andere Ausgestaltungen für die Aussparung 30 sind jedoch auch möglich.

Das Ausgleichelement 31 besteht aus einem aushärtbaren Werkstoff, beispielsweise Kunststoff oder Harz, und wird in flüssiger Form in die Aussparung 30 eingeführt. In ausgehärteter Form verbleibt das Ausgleichelement 31 in der Aussparung 30. Hierdurch verhindert das Ausgleichelement 31 zum einen, dass sich das erste und zweite Verbindungselement 19a, 19b wieder voneinander trennen und zum anderen, dass die Passung zwischen dem ersten und zweiten Verbindungselement 19a, 19b erhöht wird. Das Ausgleichelement 31 wird in Richtung N in die Aussparung 30 gebracht.

Des Weiteren ist in Figur 4 erkennbar, dass das erste Verbindungselement 19a eine erste schräg zu einer Zahnsegmentebene verlaufende Anlagefläche 21a und das zweite Verbindungselement 19b eine zweite schräg zu der Zahnsegmentebene E verlaufende Anlagefläche 21b aufweist. Wenn das erste und zweite Verbindungselement 19a, 19b miteinander verbunden sind, verläuft eine Verbindungslinie zwischen der ersten und zweiten Anlagefläche 21a, 21b schräg zu der Zahnsegmentebene E.

Darüber hinaus weist das erste und zweite Verbindungselement 19a, 19b jeweils eine Erhebung 23a, 23b auf. Jede Erhebung 23a, 23b erstreckt sich dabei in radiale Richtung bzw. von der äußeren Mantelfläche des Stators 13 nach außen. Die Erhebung 23a an dem ersten Verbindungselement 19a enthält einen langen Kreisbogen und die Erhebung 23b an dem zweiten Verbindungselement 19b enthält einen kurzen Kreisbogen. Wie in Figur 4 zu erkennen ist, weist sowohl die Erhebung 23a, 23b des ersten und zweiten Verbindungselements 19a, 19b eine sich im Wesentlichen radial nach außen erstreckende Seitenfläche auf.

Die Erhebung an dem ersten und zweiten Verbindungselement 19a, 19b können jedoch auch einen im Wesentlichen gleich langen Kreisbogen aufweisen.

Wenn das erste und zweite Verbindungselement 19a, 19b miteinander verbunden sind, ergänzen sich die beiden Erhebungen 23a, 23b zu einer im Wesentlichen durchgehenden Erhebung 23 an der äußeren Mantelfläche des Stators 13, wobei diese durchgehende Erhebung 23 eine im Wesentlichen rechteckige Querschnittsfläche aufweist.

Die durchgehende Erhebung an der äußeren Mantelfläche des Stators 13 dient zur korrekten Orientierung bzw. Ausrichtung des Stators 13 bei der Montage zu einem Antrieb 10 einer Werkzeugmaschine 1.

### Bezugszeichen

- 1: Werkzeugmaschine
- 2: Gehäuse der Werkzeugmaschine
- 2a: Oberseite des Gehäuses der Werkzeugmaschine
- 2b: Unterseite des Gehäuses der Werkzeugmaschine
- 2c: vorderes Ende des Gehäuses der Werkzeugmaschine
- 2d: hinteres Ende des Gehäuses der Werkzeugmaschine
- 3: Werkzeugaufnahme
- 4: Handgriff
- 4a: oberes Ende des Handgriffs
- 4b: unteres Ende des Handgriffs
- 4c: Vorderseite des Handgriffs
- 4d: Rückseite des Handgriffs
- 5: Energieversorgung
- 6: Werkzeug
- 7: Betätigungsschalter
- 8: Steuerungseinrichtung
- 9: Werkzeugmaschinenschnittstelle
- 10: Antrieb
- 11: Getriebevorrichtung
- 12: Antriebswelle
- 13: Stator
- 14: Rotor
- 15: Spulenwicklung
- 16: Stegelement
- 16a: erstes Ende des Stegelements
- 16b: zweites Ende des Stegelements
- 17: erster Ringabschnitt
- 17a: erstes Ende des ersten Ringabschnitts
- 17b: zweites Ende des ersten Ringabschnitts
- 18: zweiter Ringabschnitt
- 18a: erstes Ende des zweiten Ringabschnitts
- 18b: zweites Ende des zweiten Ringabschnitts
- 19: Verbindungsvorrichtung
- 19a: erstes Verbindungselement
- 19b: zweites Verbindungselement
- 20: Zahneinrichtung
- 21a: erste Anlagefläche
- 21b: zweite Anlagefläche
- 23: durchgehende Erhebung
- 23a: erste Erhebung
- 23b: zweite Erhebung
- 30: Aussparung
- 31: Ausgleichelement
- E: Zahnsegmentebene
- SF1: erste Stirnfläche
- SF2: zweite Stirnfläche
- M: Mittelpunkt
- MA: Mittelachse
- N: radiale Richtung
- R: kreisförmiger Ring
- KB1: erster Kreisbogen
- KB2: zweiter Kreisbogen
- BZ: Breite der Zahneinrichtung

## Patentansprüche

1. Stator (13) für einen Elektromotor, insbesondere als Antrieb für eine Werkzeugmaschine, enthaltend wenigstens eine erste und zweite Zahneinrichtung (20) mit jeweils einem radial angeordneten Stegelement zur Aufnahme einer Spulenwicklung,
**dadurch gekennzeichnet, dass** jede Zahneinrichtung (20) einen bogenförmigen Ringabschnitt und eine Verbindungsvorrichtung (19) mit einem ersten und zweiten Verbindungselement (19a, 19b) enthält, wobei das erste und zweite Verbindungselement (19a, 19b) so formschlüssig miteinander verbindbar sind, dass in einem verbundenen Zustand wenigstens eine Aussparung (30) zwischen dem ersten und zweiten Verbindungselement (19a, 19b) zum Aufnehmen eines Ausgleichelements (31) vorgesehen ist, wobei das Ausgleichelement (31) zur Erhöhung der Passung zwischen dem ersten und zweiten Verbindungselement (19a, 19b) ausgestaltet ist und die Aussparung wenigstens eine in radialer Richtung zugängliche Öffnung zum Einführen des Ausgleichelements (31) enthält.

2. Stator (13) nach Anspruch 1,
**dadurch gekennzeichnet, dass** das Ausgleichelement (31) wenigstens teilweise einen aushärtbaren Werkstoff enthält.

3. Stator (13) nach wenigsten einem der Ansprüche 1 bis 2,
**dadurch gekennzeichnet, dass** das erste Verbindungselement (19a) an einem freien Ende des bogenförmigen Ringabschnitts und das zweite Verbindungselement (19b) im Wesentlichen an einem ersten Ende des Stegelements positioniert ist.

4. Stator (13) nach wenigstens einem der Ansprüche 1 bis 3,
**dadurch gekennzeichnet, dass** die Verbindungsvorrichtung (19) als Schnappverbindung ausgestaltet ist.

5. Stator (13) nach wenigstens einem der Ansprüche 1 bis 3,
**dadurch gekennzeichnet, dass** die Verbindungsvorrichtung (19) als Fügeverbindung ausgestaltet ist.
